Europäisches Patentamt

(19) European Patent Office

Office européen des brevets

(11) Numéro de publication: **0 282 369**
**B1**

(12) **FASCICULE DE BREVET EUROPEEN**

(45) Date de publication du fascicule du brevet: 06.02.91

(51) Int. Cl.⁵: **H 01 J 9/44,** H 04 N 17/04

(21) Numéro de dépôt: **88400292.4**

(22) Date de dépôt: **09.02.88**

(54) **Procédé de mesure automatique de convergencce et de détermination des corrections à apporter à des déviateurs pour tubes cathodiques trichromes, et machine de mise en oeuvre.**

(30) Priorité: **13.02.87 FR 8701864**

(43) Date de publication de la demande:
**14.09.88 Bulletin 88/37**

(45) Mention de la délivrance du brevet:
**06.02.91 Bulletin 91/06**

(84) Etats contractants désignés:
**DE GB IT NL**

(56) Documents cités:
**EP-A-0 049 123**
**EP-A-0 120 767**

**L'ONDE ELECTRIQUE, vol. 48, no. 499, octobre 1968, pages 894-897, Paris, FR; J.-C. STERN: "Contribution aux mesures objectives de convergence sur tube cathodique trichrome à masque perforé"**

(73) Titulaire: **VIDEOCOLOR**
**7, boulevard Romain-Rolland**
**F-92128 Montrouge (FR)**

(72) Inventeur: **Fourche, Jean-Pierre**
**THOMSON-CSF SCPI 19, avenue de Messine**
**F-75008 Paris (FR)**
Inventeur: **Legrand, Guy**
**THOMSON-CSF SCPI 19, avenue de Messine**
**F-75008 Paris (FR)**
Inventeur: **Faivre, Michel**
**THOMSON-CSF SCPI 19, avenue de Messine**
**F-75008 Paris (FR)**
Inventeur: **Berthaut, Olivier**
**THOMSON-CSF SCPI 19, avenue de Messine**
**F-75008 Paris (FR)**

(74) Mandataire: **Einsel, Robert, Dipl.-Ing.**
**Deutsche Thomson-Brandt GmbH Patent- und Lizenzabteilung Göttinger Chaussee 76**
**D-3000 Hannover 91 (DE)**

## Description

La présente invention se rapporte à un procédé de mesure automatique de convergence et de détermination automatique de corrections à apporter à des déviateurs pour obtenir une bonne convergence avec des tubes cathodiques trichromes, et à une machine de mise en oeuvre.

On connaît déjà un procédé et une machine de mesure de convergence d'un tube cathodique voir EP—A—0.120.767.

Généralement, les déviateurs de tubes cathodiques trichromes présentent, à la fabrication, même lorsque cette dernière est très soignée, des erreurs de convergence. Actuellement, pour corriger ces erreurs, lorsqu'elles ne sont pas négligeables, on a recours à un opérateur qui ajuste en position correcte chaque déviateur sur un tube cathodique "étalon" trichrome sur lequel est visualisée une mire à barres. L'opérateur procède alors, en fonction des déformations de l'image qu'il observe sur l'écran de ce tube, à des réglages mécaniques et/ou magnétiques des déviateurs en y fixant des pièces de correction magnétiques aux endroits qu'il juge être appropriés. La qualité de la correction finalement obtenue est fonction de l'expérience de l'opérateur et de son aptitude à établir une corrélation correct entre les phénomènes observés sur l'écran du tube et les réglages à effectuer. Même avec un opérateur très expérimenté, un tel processus de correction est relativement lent: 2 à 4 minutes en moyenne par déviateur.

La présente invention a pour objet un procédé de mesure automatique de convergence de déviateurs ainsi qu'un procédé de détermination de qualité de déviateurs pré-réglés, selon un critère "bon-pas bon", et une procédé permettant de réaliser les corrections précitées de façon optimale, rapide, et sans faire appel à un opérateur pour déterminer les emplacements des pièces de correction pour chaque déviateur et le nombre de ces pièces.

La présente invention a également pour objet une machine permettant de fournir automatiquement et rapidement les caractéristiques des différentes corrections nécessaires pour chaque déviateur, qui soit simple à utiliser et de prix de revient le plus faible possible.

Le procédé conforme à la présente invention consiste à disposer chaque déviateur, réglé ou pré-réglé, mécaniquement et/ou magnétiquement, toujours dans la même position sur le col d'un tube cathodique de référence, à produire sur l'écran de ce tube une mire à barres croisées, à mesurer en plusieurs points de ces barres, de préférence en 9 à 25 points, ces points étant, de préférence, régulièrement répartis à la surface de l'écran, avantageusement disposés symétriquement par rapport aux axes vertical et horizontal de la surface de l'écran, les coordonnées absolues des axes longitudinaux de ces barres, à calculer les écarts de coordonnées pour les faisceaux de 2 canons différents, à normaliser, c'est-à-dire à corriger les valeurs obtenues pour tenir compte du positionnement non réglé du déviateur et/ou des défauts de convergence au centre du tube et/ou des écarts entre le tube utilisé et un tube théorique et obtenir ainsi des valeurs correspondant à un positionnement théorique correct du déviateur et d'en déduire si le déviateur utilisé est "bon" ou "pas bon", c'est-à-dire si ses paramètres sont ou non à l'intérieur d'une fourchette de valeurs. A partir des écarts de coordonnées ainsi calculés, on détermine, de façon connue en soi, les paramètres de convergence du déviateur mesuré. Selon un aspect avantageux de l'invention, on fournit les différentes corrections éventuellement nécessaires en comparant les valeurs normalisées et les paramètres de convergence ainsi obtenus aux différentes valeurs d'un tableau pré-établi expérimentalement et fournissant, en fonction des différentes valeurs d'une gamme de valeurs normalisées les corrections globales ou ponctuelles correspondantes à effecteur sur les déviateurs. A partir de ces valeurs normalisées, on peut, pour des déviateurs à bobinage de trame non encore immobilisé par rapport au bobinage de lignes déterminer de façon semblable le réglage en position de ce bobinage.

La machine conforme à l'invention comprend un banc de mesure supportant un tube cathodique de référence, des circuits d'alimentation et de déviation pour ce tube, un générateur de mire, un ensemble de mesure de coordonnées de différentes zones de l'écran du tube cathodique, un dispositif de traitement des informations fournies par l'ensemble de mesure, ce dispositif de traitement comportant des circuits de détermination de coordonnées d'axes de barres lumineuses, des circuits de conversion de valeurs de coordonnées en valeurs normalisées, des dispositifs de mémorisation mémorisant un tableau de correspondance entre valeurs normalisées et corrections nécessaires, et un circuit de comparaison.

La présente invention sera mieux comprise à la lecture de la description détaillée d'un mode de réalisation pris comme exemple non limitatif et illustré par le dessin annexé sur lequel:

—La figure 1 est un bloc diagramme d'une machine conforme à l'invention,

—La figure 2 est une vue en plan simplifiée d'un ensemble de mesure de la machine de l'invention, disposé sur l'écran du tube cathodique de la machine, et

—Les figures 3 à 5 sont des vues schématiques simplifiées de mires à barres explicitant le procédé de correction globale de l'invention.

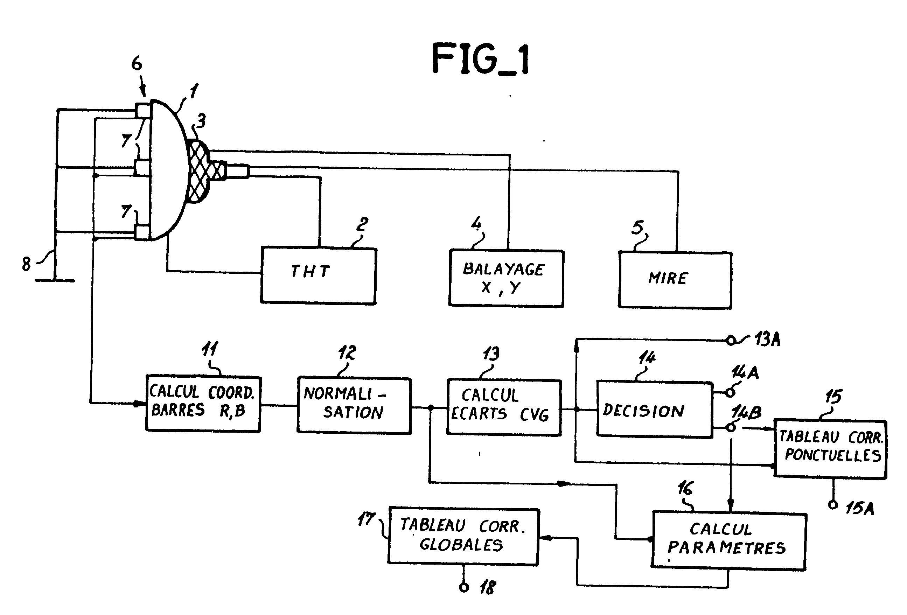

Le banc de mesure schématique représenté sur la figure 1 comporte d'abord un tube cathodique 1 dit "de référence". On pourrait utiliser un tube cathodique trichrome classique de très bonne qualité, mais selon le mode de réalisation préféré de l'invention, on utilise un tube à trois canons (disposés de la même façon que dans un tube trichrome classique), sans masque, et comportant une couche uniforme de phosphore vert. Un tel tube est plus sensible qu'un tube trichrome classique, et il permet d'obtenir une trace continue sur l'écran, ce qui permet d'effectuer la mesure sur l'ensemble du spot.

Le tube 1 est alimenté en très haute tension par un générateur classique 2. On dispose sur le col du tube 1 un déviateur 3 à mesurer. Pour simplifier les manipulations et pouvoir les automatiser, on fixe le déviateur 3 en position "standard" par rapport au tube, cette position étant identique pour tous les déviateurs soumis à la mesure. La position standard est une position moyenne entre les diverses positions correctes de différents déviateurs d'une série de déviateurs que l'on estime avoir été réglés correctement et dont on a vérifié les bonnes qualités sur un banc de mesure de l'art antérieur.

Le déviateur 3 est alimenté par un générateur de balayage classique 4. Le tube 1 est relié à un générateur de mire 5 produisant une mire de barres alternativement horizontales et verticales dont la luminosité, considérée transversalement, est modulée par exemple selon une loi au moins approximativement gaussienne, ainsi que décrit dans EP—A—0 120 767 de la Demanderesse. Ce générateur 5 est alternativement relié aux trois canons du tube 1.

On applique sur l'écran du tube 1 un ensemble de mesure 6. L'ensemble 6 comporte plusieurs capteurs 7 fixés sur un support approprié 8, par exemple neuf capteurs disposés aux endroits "stratégiques" de l'écran où les mesures de convergence sont les plus utiles. Ces endroits sont par exemple les quatre coins, le centre, et les milieux des quatre côtés. Bien entendu, les capteurs 7 sont disposés de telle façon, et les barres de mire horizontales 9 et verticales 10 sont produites de telle façon que les axes des barres passent sensiblement par les centres des capteurs 7. On pourrait disposer, comme préconisé dans EP—A—0 120 767, les capteurs perpendiculairement à l'axe des barres, mais cela obligerait à les tourner sur eux-mêmes de 90° lorsque l'on passe des barres horizontales aux barres verticales. Selon une caractéristique avantageuse de l'invention, les capteurs 7 sont disposés à 45° par rapport à l'axe des barres, et il suffit, pour obtenir les valeurs vraies des écarts en coordonnées cartésiennes, de multiplier les écarts mesurés par $1/\sqrt{2}=\sqrt{2}/2$, ces mesures se faisant successivement avec des barres horizontales puis verticales (ou inversement).

De façon analogue à celle préconisée par le susdit Brevet français, on obtient grâce à un circuit 11 la mesure de la convergence, pour un tube trichrome, en mesurant l'écart des positions des barres obtenues pour deux faisceaux différents, puis en multipliant les résultats des mesures par $\sqrt{2}/2$ si, comme préconisé ci-dessus, les capteurs sont inclinés à 45°.

Bien entendu, si, au lieu de mesurer la convergence de tubes trichromes, on désire déterminer les qualités des déviateurs et les éventuelles corrections nécessaires, on utilise de préférence, comme précisé ci-dessus des tubes verts à trois canons, sans masque.

Ensuite, on "normalise" à l'aide d'un circuit 12 les mesures brutes obtenues, c'est-à-dire que l'on convertit ces mesures pour rétablir celles que l'on aurait obtenues si le déviateur était en position "normalisée" de mesure. Cette position est la position usuelle de mesure d'un déviateur sur un tube cathodique lorsque les convergences au centre sont mise à zéro, et lorsque le déviateur est tourné, autour du col du tube, de façon que la ligne horizontale centrale de la mire coïncide avec l'axe horizontal mécanique de la dalle (écran du tube), et lorsque le déviateur est déplacé en X et en Y (translation ou "tilt") de façon àt équilibrer les défauts de convergence des faisceaux latéraux (rouge et bleu) aux points 6H et 12H (aux milieux des grands côtés de l'écran) par exemple. Ainsi, on peut établir pour un type de déviateurs les lois de variation des convergences en fonction de la position du déviateur sur le col du tube (par rotation ou par déplacement en X et Y) et de la configuration des convergences au centre. La connaissance de ces lois va permettre de déduire, pour un déviateur soumis à la mesure, et mis sur le col du tube en position fixe, les corrections à apporter aux mesures pour rétablir celles que l'on aurait faites si le déviateur avait été en position normalisée. Ces corrections sont déterminées en fonction d'un certain nombre d'indicateurs qui sont par exemple les défauts de convergence au centre, le défaut d'alignement 3H—9H d'une barre de mire verte (c'est-à-dire une barre horizontale passant par le centre de l'écran), des défauts de symétrie de convergence rouge/bleu à 6H—12H—(on repère les différentes points de la périphérie de l'écran par analogie avec un cadran de montre: 12 heures, 6 heures, etc).

Si l'on assimile ces lois de variation à des lois linéaires (ce qui est généralement possible avec une bonne approximation sinon, si on recherche une meilleure précisiom, on peut établir des lois plus complexes), on peut déterminer lesdites corrections de façon simple selon l'exemple suivant.

Soient au point P les mesures brutes Ph et Pv relatives aux barres de mire horizontales et verticales, respectivement. Soient Cx et Cy les défauts de convergence au centre (entre barres horizontales et verticales respectivement), et soient Av et Cv l'amplitude verticale et le croisement vertical ("skew" en anglais) définissant les défauts de symétrie de convergence à 6H et 12H (c'est-à-dire aux milieux des grands côtés du bas et du haut de l'écran) des faisceaux rouge et bleu. Ces valeurs Av et Cv sont données par les relations:

$$Av=\frac{M12H-M6H}{2} \quad Cv=\frac{M12V-M6V}{2}$$

M12H, M6H, M12V et M6V étant respectivement les mesures brutes effectuées entre barres horizontales (H) et verticales (V) aux points 12H et 6H de l'écran.

Les valeurs normalisées de ces mesures brutes NH et NV (entre barres horizontales et verticales) sont alors données par les relations:

$$NH = PH - a.Cx - b.Cy - c.Av - d.Cv$$

$$NV = PV - e.Cx - f.Cy - g.Av - h.Cv$$

dans des relations, les coefficients a, b...h sont ceux des lois de variation de convergence précitées, au point P, pour les différents paramètres correspondants.

Tous ces calculs peuvent être effectués par un calculateur, programmé de façon évidente pour l'homme du métier.

Le bon choix de la position du déviateur à mesurer sur le col du tube cathodique permet d'obtenir des défauts de symétrie de convergence à 6H/12H d'amplitude relative faible (généralement inférieure ou égale à 1 mm). Ainsi, dans la plupart des ces, on peut assimiler les lois de variation de convergence à des lois linéaires.

Grâce au procédé de normalisation par calcul décrit ci-dessus, on peut également introduire une correction supplémentaire représentant l'écart éventuel de caractéristiques de convergence du tube sur lequel on effectue les mesures par rapport à un tube "idéal" de référence. Cette correction supplémentaire peut être réalisée de façon analogue à la normalisation, pour chacun des points de mesure.

A partir des valeurs normalisées disponibles à la sortie du calculateur 12, un circuit 13 effectue la comparaison avec les valeurs théoriques correspondantes. Ces valeurs théoriques sont mémorisées dans une mémoire du circuit 13 qui les compare simplement aux valeurs normalisées.

Le signal de différence (écart de convergence) produit par le circuit 13 est disponible sur sa sortie 13A de laquelle il peut être envoyé à tout dispositif de traitement approprié, tel que dispositif de mémorisation ou d'enregistrement, ou dispositif de traitement statistique, pour surveiller la qualité d'une production.

La sortie 13A est par ailleurs reliée à un dispositif 14 de décision qui comporte essentiellement un circuit à seuils. Les seuils de ce circuit correspondent aux valeurs maximales admissibles pour valeurs normalisées ou les écarts de convergence (écarts admissibles en fonction de spécifications ou de critères liés à un nombre de capteurs réduit et à la connaissance du produit). Ce circuit 14 comporte deux sorties: 14A: "Bon" (à l'intérieur des seuils de tolérance) et 14B: "Pas Bon". Bien entendu, dans le cas où les déviateurs sont jugés "bons", il n'y a lieu de procéder à aucun autre traitement. Par contre, s'ils sont jugés "mauvais", il se pose la question de leur récupération, car, en général, il est possible de corriger leurs défauts de convergence à l'aide de shunts magnétiques.

Un dispositif 15 activé par la sortie 14B permet de mettre en oeuvre un premier niveau de correction, menant à l'utilisation connue en soi, de shunts magnétiques à l'effet localisé sur l'écran, en général en des points de la périphérie de l'écran. Le circuit 15 comporte essentiellement un dispositif de mémoire dans lequel on mémorise les caractéristiques des différentes corrections localisées nécessaires en fonction des différentes valeurs d'écarts de convergence. Etant donné que l'on essaie en général d'utiliser le moins possible de types différents de shunts magnétiques et de limiter le nombre de leurs emplacements, on fera correspondre une correction donnée à une fourchette de plusieurs valeurs d'écarts de convergence.

Le dispositif 15 comporte en outre un comparateur relié d'une part à ce dispositif de mémoire et d'autre part à la sortie 13A du circuit 13, ce comparateur fournissant à la sortie 15A du dispositif 15 les caractéristiques de la correction localisée nécessaire.

Ce procédé de correction mis en oeuvre par le dispositif 15 s'apparent au procédé utilisé par des opérateurs bien entraînés, mais l'appareil de l'invention met en oeuvre son procédé plus rapidement et de façon plus précise (les réactions d'un opérateur peuvent varier au cours de la journée en fonction de son état de fatigue et de divers autres facteurs).

Selon l'invention, on peut également mettre en oeuvre un procédé de correction plus élaboré. On procède alors à une correction globale de l'image: le dispositif de l'invention comporte un dispositif 16 qui calcule, à partir de mesures normalisées fournies par le circuit 12, l'ensemble des paramètres significatifs d'une image. Il peut ainsi vérifier la symétrie correcte de l'image (haut/bas et gauche/droite), la correspondance entre la situation d'astigmatisme des champs magnétiques du déviateur mesuré et la situation normale que l'on devrait obtenir (situation de référence). Ce dispositif 16 est activé par la sortie 14B du circuit 14. La sortie du dispositif 16 est reliée à un dispositif 17. Le dispositif 17 contient en mémoire les paramètres théoriques de convergence du type de déviateur en contrôle, ainsi que les corrections globales correspondant aux écarts entre les paramètres théoriques et les paramètres calculés. Ces corrections sont disponibles à la sortie 18.

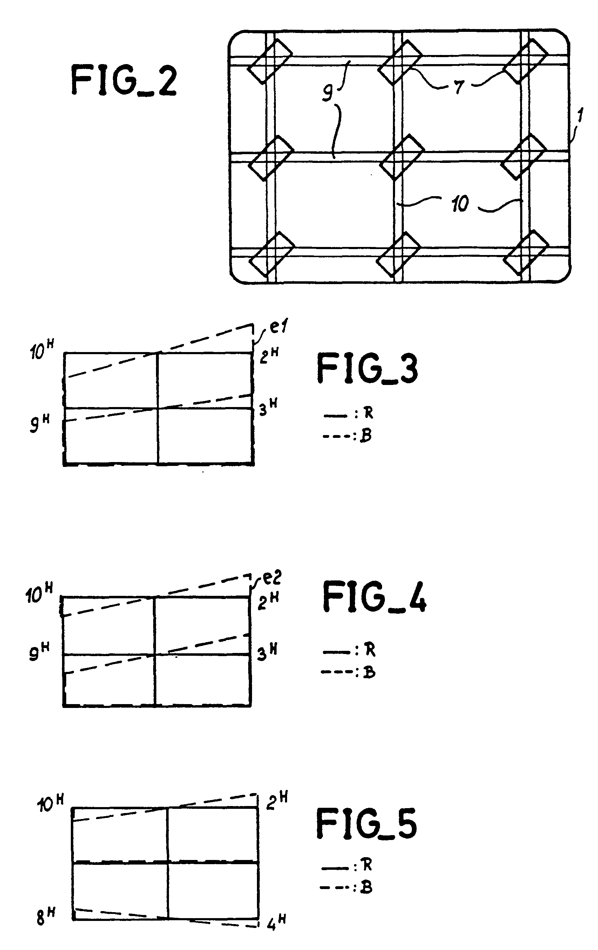

On va expliquer le procédé de correction en référence aux exemples des figures 3 à 5 du dessin, qui se rapportent à un exemple très simple de configuration possible.

Soit un déviateur dont l'image normalisée se présente comme représenté en figure 3 (sur les figures 3 à 5, les lignes en traits pleins correspondant au canon "rouge" et les lignes en traits interrompus au canon "bleu"). Si on procédait à une correction localisée de ce déviateur, on aurait à corriger les points 2H et 10H (l'erreur e1 de convergence à 2H, ainsi qu'à 10H, est nettement supérieure aux spécifications). On effectue ces corrections ponctuelles, de façon connue en soi, et on obtient comme représenté en figure 4, une image pour laquelle l'erreur e2 en 2H et 10H est à peu près la moitié de l'erreur e1. Il reste cependant un défaut important en 3H—9H, pour lequel il faudrait procéder à une ou plusieurs autres corrections ponctuelles. Par contre, si on procède dès le début (figure 3) à une analyse des paramètres de l'ensemble de l'image, on en déduit un déséquilibre 3H—9H (défaut de "cross-over"), et en en ayant mesuré la valeur, en peut déterminer la correction globale appropriée. Un calcul, effectué de façon connue en soi, indique qu'après la correction appropriée de ce défaut de "cross-over", tous les points de l'image seront nettement à l'intérieur des limites des spécifications. Après une telle correction "globale", on obtient une image telle que celle de la figure 5. On réalise ainsi une correction rendant les champs magnétiques symétriques et on obtient une image beaucoup plus symétrique que les précédentes. En particulier, tous les points internes, dont les déformations sont les plus sensibles pour l'appréciation de la qualité des images visualisées sur l'écran, présentent alors des défauts faibles.

Un tel procédé de correction globale pourrait éventuellement être mis en oeuvre par un opérateur très bien entraîné, mais pour que cette mise en oeuvre soit faite de façon valable, l'opérateur devrait effectuer de nombreuses mesures longues, et des calculs parfois moins simples que dans l'exemple ci-dessus, par exemple dans le cas où des défauts de convergence affecteraient les quatre coins de l'image, ce qui serait rédhibitoire pour une production en grande série.

Selon le procédé de l'invention, la correction globale peut, bien entendu, corriger en même temps d'autres défauts. Ainsi, d'après l'analyse des paramètres de l'ensemble de l'image, on peut, le cas échéant, remédier également aux défauts de "balance", ce qui, associé à la correction précitée du "cross-over", permet de symétriser pratiquement parfaitement l'image.

Dans d'autres cas de figure, on peut également corriger un défaut d'astigmatisme du champ ligne ou trame pour rapprocher les caractéristiques du déviateur de celles d'un produit de référence.

L'avantage de la machine de mise en oeuvre du procédé de l'invention est de permettre d'associer ces différentes corrections très rapidement et de façon optimale pour déterminer les corrections nécessaires les plus simples et les moins nombreuses (une correction globale a en général le même effet, ou un effet meilleur, que plusieurs corrections ponctuelles, et d'autre part, des corrections ponctuelles peuvent apporter des défauts en d'autres endroits).

La détermination préalable de la position des shunts est faite de façon expérimentale, en tenant compte de la physique du déviateur et des connaissances normales de l'homme de l'art.

Bien entendu, les différentes dispositifs 12 à 17 peuvent être remplacés par un calculateur unique assurant toutes leurs fonctions.

Les capteurs 7 ayant, par rapport à l'écran du tube 1 des positions géométriques très précises, ces capteurs permettent de déterminer les coordonnées absolues des traces des faisceaux sur l'ensemble de l'écran (après étalonnage de la machine à l'aide d'un déviateur étalon préalablement mesuré). A partir de ces mesures de coordonnées faites sur l'image monochrome (de préférence celle du faisceau vert) la machine peut calculer, de façon connue en soi, toutes les composantes de la géométrie de l'image: orthogonalité, coussin EST/OUEST et NORD/SUD, trapèzes de géométrie, etc ... .On peut également mesurer alors les sensibilités horizontale et verticale du déviateur, c'est-à-dire les amplitudes de l'image pour des courants de balayage horizontal et vertical contrôlés.

**Revendications**

1. Procédé de mesure automatique de convergence et de détermination de corrections à apporter à ces déviateurs pour tubes cathodiques trichromes, caractérisé par le fait que l'on dispose chaque déviateur, réglé ou pré-réglé, mécaniquement et/ou magnétiquement, toujours dans la même position sur le col d'un tube cathodique de référence, que l'on produit sur l'écran de ce tube une mire à barres croisées, que l'on mesure en plusieurs points de ces barres, de préférence en 9 à 25 points, les coordonnées absolues des axes longitudinaux de ces barres, que l'on calcule les écarts de coordonnées pour les faisceaux de deux canons différents, que l'on normalise les valeurs obtenues pour tenir compte d'un positionnement non réglé du déviateur et/ou des défauts de convergence au centre du tube et/ou des écarts entre le tube utilisé et un tube théorique, pour obtenir ainsi des valeurs correspondant à un positionnement théorique correct du déviateur, et que l'on calcule à partir de ces valeurs normalisées les erreurs de convergence du déviateur.

2. Procédé selon la revendication 1, caractérisé par le fait que les points de mesure des barres croisées sont régulièrement répartis à la surface de l'écran, symétriquement par rapport aux axes vertical et horizontal de l'écran.

3. Procédé selon l'une quelconque des revendications précédentes, caractérisé par le fait que le tube de référence utilisé est un tube à trois canons, sens masque, et à écran entièrement vert.

4. Procédé selon l'une des revendications précédentes, pour des déviateurs à bobinage de trame non encore immobilisé par rapport au bobinage ligne, caractérisé par le fait qu'à partir des mesures normalisées on détermine le réglage en position de ce bobinage.

5. Procédé selon l'une des revendications précédentes, caractérisé par le fait qu'à partir des mesures normalisées on calcule les écarts de convergence du déviateur mesuré.

6. Procédé selon la revendication 5, caractérisé par le fait qu'on détermine la qualité du déviateur par un critère "bon-pas bon" selon que ses écarts de convergence ou ses valeurs normalisées sont ou non à l'intérieur d'une fourchette de valeurs.

7. Procédé selon la revendication 5 ou 6, caractérisé par le fait qu'à partir des valeurs d'écarts de convergence du déviateur on détermine les corrections ponctuelles à lui appliquer.

8. Procédé selon la revendication 5 ou 6, caractérisé par le fait qu'à partir des valeurs normalisées de convergence du déviateur, on calcule les paramètres de convergence de ce déviateur et on en déduit les corrections globales à lui appliquer.

9. Procédé selon l'une des revendications précédentes, caractérisé par le fait qu'à partir des valeurs mesurées par les capteurs avec un seul faisceau, on détermine les composants de la géométrie de l'image du tube cathodique.

10. Machine de mesure automatique de convergence et de détermination automatique des corrections à apporter à des déviateurs pour tubes trichromes, comportant un banc de mesure supportant un tube de référence, des circuits d'alimentation (2) et de déviation (3, 4) pour ce tube (1), un générateur de mire (5), un ensemble de mesure (7) de coordonnées de différentes zones de l'écran du tube, et un dispositif de traitement des informations fournies par l'ensemble de mesure (11—18), caractérisée par le fait que le dispositif de traitement comporte des dispositifs (11) de détermination de coordonnées d'axes de barres lumineuses produites par le générateur de mire, reliés à des dispositifs (12) de conversion de valeurs de coordonnées en valeurs normalisées, et un dispositif de calcul d'écarts de convergence (13).

11. Machine selon la revendication 10, caractérisée par le fait que le dispositif de calcul d'erreurs de convergence est suivi d'un dispositif de décision (14) à circuits à seuil.

12. Machine selon l'une des revendications 10 ou 11, caractérisée par le fait que le dispositif de calcul d'erreurs de convergence est relié à un dispositif (15) de détermination de corrections ponctuelles.

13. Machine selon l'une des revendications 10 ou 11, caractérisée par le fait que le dispositif de conversion en valeurs normalisées (12) est relié à un dispositif (16) de calcul de paramètres de l'ensemble de l'image produite par le générateur de mire, relié à lui-même à un dispositif (17) de détermination de corrections globales.

**Patentansprüche**

1. Verfahren zur automatischen Konvergenzmessung und Bestimmung der bei den Ablenkeinheiten vorzunehmenden Korrekturen für Dreistrahlbildröhren, dadurch gekennzeichnet, daß jede Ablenkeinheit, mechanisch und/oder magnetisch justiert oder vorjustiert, immer in derselben Stellung am Hals einer Bezugskathodenstrahlröhre angeordnet wird, daß auf dem Bildschirm dieser Röhre ein Testbild mit gekreuzten Streifen angezeigt wird, daß an verschiedenen Punkten dieser Streifen, vorzugsweise an 9 bis 25 Punkten, die absoluten Koordinaten der Längsachsen dieser Streifen gemessen werden, daß die Abweichungen der Koordinaten für die Strahlen zweier verschiedener Elektronenstrahlröhren berechnet werden, daß die erhaltenen Werte vereinheitlicht werden, um einer nicht justierten Stellung der Ablenkeinheit und/oder den Konvergenzfehlern im Zentrum der Röhre und/oder den Abweichungen zwischen der verwendeten Röhre und einer theoretischen Röhre Rechnung zu tragen, um so Werte zu erhalten, die einer theoretischen korrekten Stellung der Ablenkeinheiten entsprechen, und daß aufgrund dieser vereinheitlichten Werte die Konvergenzfehler der Ablenkeinheit berechnet werden.

2. Verfahren gemäß Patentanspruch 1, dadurch gekennzeichnet, daß die Meßpunkte der gekreuzten Streifen regelmäßig über die Oberfläche des Bildschirmes und symmetrisch bezüglich der vertikalen und horizontalen Achsen des Bildschirmes verteilt sind.

3. Verfahren gemäß irgendeinem der vorhergehenden Patentansprüche, dadurch gekennzeichnet, daß die verwendete Bezugsröhre eine Dreistrahlbildröhre ohne Maske und mit vollständig grünem Bildschirm ist.

4. Verfahren gemäß einem der vorangehenden Patentansprüche für Ablenkeinheiten mit noch nicht relativ zur Zeilenwicklung fixierter Teilbildwicklung, dadurch gekennzeichnet, daß aufgrund der vereinheitlichten Meßwerte die Justierung der Stellung dieser Wicklung bestimmt wird.

5. Verfahren gemäß einem der vorangehenden Patentansprüche, dadurch gekennzeichnet, daß aufgrund der vereinheitlichten Meßwerte die Abweichungen der Konvergenz der gemessenen Ablenkeinheit berechnet werden.

6. Verfahren gemäß Patentanspruch 5, dadurch gekennzeichnet, daß die Qualität der Ablenkeinheit nach einem "gutschlecht"-Kriterium bestimmt wird, je nachdem ob ihre Abweichungen der Konvergenz oder ihre vereinheitlichten Werte sich innerhalb eines Wertebereichs befinden oder nicht.

7. Verfahren gemäß Patentanspruch 5 oder 6, dadurch gekennzeichnet, daß aus den Werten der Abweichungen der Konvergenz der Ablenkeinheit die an ihr auszuführenden punktuellen Korrekturen bestimmt werden.

8. Verfahren gemäß Patentanspruch 5 oder 6, dadurch gekennzeichnet, daß aus den vereinheitlichten Konvergenzwerten der Ablenkeinheit die Konvergenzparameter dieser Ablenkeinheit berechnet und davon die an ihr auszuführenden globalen Korrekturen abgeleitet werden.

9. Verfahren gemäß einem der vorangehenden Patentansprüche, dadurch gekennzeichnet, daß aus den mit den Sensoren mit einem einzigen Strahl gemessenen Werten die Komponenten der Bildgeometrie der Kathodenstrahlröhre bestimmt werden.

10. Maschine zur automatischen Konvergenzmessung und Bestimmung der bei den Ablenkeinheiten vorzunehmenden Korrekturen für Dreistrahlbildröhren, bestehend aus einer Meßbank mit einer Bezugsröhre, Versorgungs- (2) und Ablenkschaltungen (3, 4) für diese Röhre (1), einem Testbildgenerator (5), einer Meßanordnung (7) für die Koordinaten verschiedener Bereiche des Bildschirmes der Röhre und einer Vorrichtung zur Verarbeitung der von der Meßanordnung gelieferten Informationen, dadurch gekennzeichnet, daß die Verarbeitungsvorrichtung Einrichtungen (11) zur Bestimmung von Koordinaten von Achsen leuchtender, vom Testbildgenerator erzeugter Streifen aufweist, die mit Einrichtungen (12) zur Konvertierung von Koordinatenwerten in vereinheitlichte Werte verbunden sind, und eine Einrichtung zur Berechnung der Abweichungen der Konvergenz (13).

11. Maschine gemäß Patentanspruch 10, dadurch gekennzeichnet, daß auf die Einrichtung zur Berechnung der Konvergenzfehler eine Entscheidungseinrichtung (14) mit Schwellenwertschaltungen folgt.

12. Maschine gemäß einem der Patentansprüche 10 oder 11, dadurch gekennzeichnet, daß die Einrichtung zur Berechnung der Konvergenzfehler mit einer Einrichtung (15) zur Bestimmung der punktuellen Korrekturen verbunden ist.

13. Maschine gemäß einem der Patentansprüche 10 oder 11, dadurch gekennzeichnet, daß die Einrichtung zur Konvertierung in vereinheitlichte Werte (12) mit einer Einrichtung (16) zur Berechnung von Parametern des gesamten durch den Testbildgenerator erzeugten Bildes verbunden ist, die ihrerseits mit einer Einrichtung (17) zur Bestimmung von globalen Korrekturen verbunden ist.

## Claims

1. Method for automatic convergence measuring and determination of the corrections to bring about to deflectors for trichromatic cathode ray tubes, characterized in that each deflector, mechanically and/or magnetically set or preset, is arranged always in the same position on the neck of a reference cathode ray tube, that a bar pattern with crossed bars is generated on the screen, that the absolute coordinates of the longitudinal axes of these pattern bars are measured in several points of these bars, preferably in 9 to 25 points, that the deviations of the coordinates for the beams of two different guns are calculated, that the obtained values are normalized to consider the unset positioning of the deflector and/or convergence errors in the center of the tube and/or divergences between the tube used and a theoretical tube to thus obtain values corresponding to a correct theoretical positioning of the deflector and that the convergence errors of the deflector are calculated from these normalized values.

2. Method according to claim 1, characterized in that the measuring points of the crossed bars are evenly distributed over the surface of the screen, symmetrically to the vertical and horizontal axes of the screen.

3. Method according to any of the preceding claims, characterized in that the reference tube used is a three-gun tube without mask and with an entirely green screen.

4. Method according to any of the preceding claims for deflectors with a field winding which is not yet immobilized in relation to the line winding, characterized in that the position adjustment of this winding is determined from normalized measures.

5. Method according to any of the preceding claims, characterized in that the convergence differences of the measured deflector are calculated from normalized measures.

6. Method according to claim 5, characterized in that the quality of the deflector is determined by a criterion "good—not good" depending on whether its convergence differences or its normalized values are within a range of values or not.

7. Method according to claim 5 or 6, characterized in that the punctual corrections to bring about to the deflector are determined from the values of the convergence differences of the deflector.

8. Method according to claim 5 or 6, characterized in that from normalized convergence values of the deflector the convergence parameters of this deflector are calculated and the comprehensive corrections to bring about deduced.

9. Method according to any of the preceding claims, characterized in that from the values measured by the sensors with a single beam the components of the geometry of the image of the cathode ray tube are determined.

10. Machine for automatic convergence measuring and determination of the corrections to bring about to deflectors for trichromatic cathode ray tubes, comprising a measuring bench supporting a reference tube, feeding (2) and deflecting (3, 4) circuits for this tube (1), a pattern generator (5), a measuring assembly (7) for the coordinates of different areas of the screen of the tube and a processing device for the information supplied by the measuring assembly (11—18), characterized in that the processing device comprises devices (11) for the determination of the coordinates of the axes of luminous bars produced by the pattern generator, connected to devices (12) for the conversion of the values of the coordinates into normalized values and a device for the calculation of convergence differences (13).

11. Machine according to claim 10, characterized in that the device for the calculation of convergence errors is followed by a decision device (14) with threshold circuits.

12. Machine according to any of the claims 10 or 11, characterized in that the device for the calculation of convergence errors is connected to a device (15) for the determination of punctual corrections.

13. Machine according to any of the claims 10 or 11, characterized in that the device for the conversion into normalized values (12) is connected to a device (16) for the calculation of the parameters for the whole image produced by the pattern generator, connected itself to a device (17) for the determination of comprehensive corrections.

FIG_1

FIG_2

FIG_3

—— : R
---- : B

FIG_4

—— : R
---- : B

FIG_5

—— : R
---- : B

2